# DEMANDE DE BREVET EUROPEEN

(11) **EP 1 442 947 A1**
(43) Date de publication de la demande: **04.08.2004**
(21) Numéro de dépôt: 04290223.9
(22) Date de dépôt: 28.01.2004
(51) Int. Cl.: B60R 21/34, B62D 25/16

(54) **Aile de véhicule automobile ayant une zone fusible**

(30) Priorité: 29.01.2003 FR 0300992
(71) Demandeur: COMPAGNIE PLASTIC OMNIUM, 69007 Lyon (FR)
(72) Inventeur: Roux, Jean-Pierre, 69400 Villefranche Sur Saone (FR); Cheron, Hugues, 01800 Meximieux (FR); Fayt, Arnold, 01640 Jujurieux (FR)
(74) Mandataire: Remy, Vincent Noel Paul

(57) **Abrégé**

Aile de véhicule automobile ayant une peau séparant l'intérieur et l'extérieur de l'aile, caractérisée en ce que cette peau possède une zone fusible apte à s'ouvrir lorsqu'elle subit une poussée de l'intérieur vers l'extérieur de l'aile.

## Description

La présente invention concerne le domaine de la sécurité des piétons impliqués dans des accidents de la circulation automobile.

On sait que, sur la carrosserie d'un véhicule automobile, les régions environnant la jonction entre chaque aile avant et le capot sont particulièrement dangereuses pour les piétons car elles sont très rigides.

L'invention propose de protéger les piétons en déployant un airbag à l'extérieur du véhicule pour couvrir ces régions dangereuses et empêcher ou amortir d'éventuels chocs contre celles-ci.

A cet effet, l'invention a pour objet une aile de véhicule automobile ayant une peau séparant l'intérieur et l'extérieur de l'aile, caractérisée en ce que cette peau possède une zone fusible apte à s'ouvrir lorsqu'elle subit une poussée de l'intérieur vers l'extérieur de l'aile.

Suivant d'autres caractéristiques avantageuses de l'invention :
- l'aile est en matière plastique par exemple en thermoplastique ou en thermodurcissable ;
- l'intérieur de l'aile comporte un boîtier d'airbag situé au droit de la zone fusible ;
- le boîtier d'airbag est issu de moulage avec l'aile en matière plastique.

On va maintenant décrire un mode de réalisation détaillé de l'invention à titre d'exemples.

On réalise une aile avant de véhicule automobile en NORYL GTX (marque déposée de la société General Electric). Cette aile est constituée d'une peau ayant une face externe et une face interne. La face externe de l'aile est destinée à être exposée à la vue depuis l'extérieur du véhicule, tandis que la face interne est destinée à être dirigée vers l'intérieur du véhicule, lorsque l'aile est positionnée sur le châssis. La face externe se trouve donc à l'extérieur de l'aile et la face interne à l'intérieur de l'aile.

L'épaisseur de la peau est sensiblement égale à 2 mm.

L'aile est disposée globalement dans un plan vertical, (lorsqu'elle est positionnée sur le véhicule) et se termine vers le haut par une arête supérieure voisine du capot.

A proximité de cette arête, une zone fusible sensiblement rectangulaire est délimitée par une gorge d'épaisseur réduite, de 1 mm.

Pour préserver l'esthétique de l'aile, cette gorge n'est marquée que sur la face interne, la face externe étant uniforme y compris au droit de la gorge.

Cette gorge forme une ligne de fragilité qui cède et dégage un passage traversant rectangulaire dans l'aile en cas de poussée provenant de l'intérieur en direction de l'extérieur de l'aile.

Cette poussée peut provenir du déploiement brutal d'un airbag logé dans un boîtier rapporté sur l'aile ou issu de moulage avec l'aile et placé sur sa face interne en regard de la zone fusible délimitée par la gorge.

Ce mode de réalisation particulier n'est fourni qu'à titre d'exemples et ne présente aucun caractère limitatif

## Revendications

1. Aile de véhicule automobile ayant une peau séparant l'intérieur et l'extérieur de l'aile, **caractérisée en ce que** cette peau possède une zone fusible apte à s'ouvrir lorsqu'elle subit une poussée de l'intérieur vers l'extérieur de l'aile.

2. Aile selon la revendication 1, réalisée en matière plastique.

3. Aile selon la revendication 1 ou 2, dont l'intérieur comporte un boîtier d'airbag situé au droit de la zone fusible

4. Aile selon la revendication 4, dans laquelle le boîtier d'airbag est issu de moulage avec l'aile en matière plastique.
